# DEMANDE DE BREVET EUROPEEN

(11) **EP 1 427 113 A1**
(43) Date de publication de la demande: **09.06.2004**
(21) Numéro de dépôt: 03300212.2
(22) Date de dépôt: 13.11.2003
(51) Int. Cl.: H04B 1/38, H04M 1/60

(54) **Ensemble à microphone et haut-parleur destiné à cooperer avec un téléphone mobile**

(30) Priorité: 02.12.2002 FR 0215145
(71) Demandeur: ATS Accessoires Telecom Services, 77400 Saint Thibault des Vignes (FR)
(72) Inventeur: Deplanques, Pascal, 30900 Nimes (FR); Laveissiere, Christian, 34270 Saint Mathieu de Treviers (FR)
(74) Mandataire: Grynwald, Albert

(57) **Abrégé**

L'invention concerne un ensemble à microphone (16) et haut-parleur (22) destiné à coopérer avec un téléphone mobile, cet ensemble comprenant des moyens pour la prise de ligne du téléphone mobile et un connecteur de liaison avec ce téléphone.

Les moyens pour la prise de ligne comportent un interrupteur (34) dans le circuit du microphone (16), un interrupteur (36) dans le circuit du haut-parleur (22) et un moyen d'actionnement (50) pour que ces deux interrupteurs soient actionnables simultanément afin que l'ensemble puisse coopérer avec un téléphone mobile du type à prise de ligne effectuée par appel de courant provenant du circuit du microphone et avec un téléphone mobile du type à prise de ligne par appel de courant provenant du circuit du haut-parleur.

## Description

L'invention est relative à un ensemble à microphone et haut-parleur destiné à être associé à un téléphone mobile afin, notamment, de permettre l'utilisation du téléphone mobile en mode « main libre ».

Un tel ensemble est quelquefois appelé « kit piéton ». Il comporte habituellement un (ou plusieurs) support(s) destiné(s) à être porté par l'utilisateur afin que le microphone soit à proximité de sa bouche et que le haut-parleur constitue une oreillette.

Bien que dans le domaine des télécommunications il est nécessaire que les divers appareils soient compatibles entre eux, les fabricants de téléphones mobiles gardent une liberté sur certains paramètres, en particulier pour la connexion des divers accessoires.

Ainsi un ensemble à microphone et haut-parleur connectable à un téléphone mobile est spécifique à chaque modèle de téléphone. En effet, en premier lieu son connecteur doit être adaptable au téléphone. En second lieu, la prise de ligne effectuée, par l'intermédiaire de cet ensemble, doit se réaliser, selon le type de téléphone, par un appel en courant soit dans le circuit du microphone, soit dans un circuit lié au haut-parleur, soit dans un circuit auxiliaire. A cet effet, on prévoit un interrupteur dans l'un de ces circuits et l'actionnement de cet interrupteur provoque l'appel en courant qui, détecté par le téléphone mobile, permet la prise de ligne.

Par « prise de ligne », on entend ici les fonctions de décrocher et raccrocher la ligne.

Par ailleurs, le signal délivré par un microphone se traduit par une différence de potentiel, en général entre une borne positive et la masse. De même, le signal appliqué à l'entrée du haut-parleur, est un potentiel entre une borne positive et la masse. Dans ces conditions, si les masses des deux organes (micro et haut-parleur) sont distinctes, le connecteur de liaison au téléphone mobile comportera quatre fils et, si ces masses sont communes, ce connecteur comportera trois fils pour le microphone et le haut parleur, plus, éventuellement, un quatrième pour la prise de ligne.

L'invention vise à permettre la réalisation d'un tel ensemble à microphone et haut parleur pour téléphone mobile qui présente un maximum de composants communs pour tous les types de téléphones mobiles afin de réduire les coûts de fabrication et de faciliter la distribution.

A cet effet, l'invention concerne, selon un premier de ses aspects, un ensemble à microphone et haut-parleur pour téléphone mobile qui comprend un interrupteur dans le circuit du microphone, un interrupteur dans le circuit du haut-parleur et un moyen pour permettre l'actionnement simultané de ces deux interrupteurs. Les deux interrupteurs peuvent constituer des composants distincts ou former les deux interrupteurs d'un couple d'interrupteurs actionnables simultanément.

Etant donné que le téléphone mobile effectue la prise de ligne quand il détecte un appel en courant, selon le type de téléphone, provenant du circuit du microphone, ou provenant du circuit du haut-parleur, la prise de ligne sera donc nécessairement effectuée car l'ensemble provoque un appel en courant sur les deux circuits.

Il est vrai qu'avec cette réalisation, on prévoit deux interrupteurs distincts ou non alors que dans les ensembles connus, on n'en prévoit qu'un seul, mais, d'une part, le coût d'un interrupteur est faible et, d'autre part, l'augmentation du nombre d'interrupteurs permet une fabrication encore en plus grande série et donc, un abaissement du coût.

Globalement, l'augmentation du coût est pratiquement négligeable et, en outre, avec cette augmentation de coût négligeable, on obtient une fonctionnalité nouvelle qui est de permettre la réalisation d'ensembles adaptables à tous les types de téléphones mobiles.

Par ailleurs, l'invention vise à permettre la réalisation d'un ensemble à microphone et haut-parleur pour téléphone mobile qui puisse être utilisé quel que soit le nombre de fils (3 ou 4) reliant cet ensemble au téléphone mobile.

Ainsi, selon un second de ses aspects, qui peut être utilisé en combinaison avec le premier aspect, ou indépendamment de ce premier aspect, l'invention concerne un ensemble à haut-parleur et microphone pour téléphone mobile qui comprend un connecteur à quatre conducteurs de sortie, deux vers le circuit à microphone et deux vers le circuit à haut-parleur, ainsi qu'un commutateur présentant une première position dans laquelle les deux conducteurs du circuit du haut-parleur sont séparés des deux conducteurs du circuit de microphone, et une seconde position pour laquelle les conducteurs de masse du haut-parleur et du microphone sont reliés entre eux, un des deux conducteurs associés au haut-parleur ou au microphone, restant alors disponible.

La position du commutateur sera fonction du type de téléphone mobile. Cette position du commutateur sera déterminée soit par le fabricant de l'ensemble, soit par le distributeur. De préférence, on prévoit des moyens pour que ce commutateur soit caché pour l'utilisateur afin que celui-ci ne puisse modifier sa position, par exemple par inadvertance.

Dans une réalisation, le quatrième conducteur est utilisé pour réaliser un appel en courant de prise de ligne. A cet effet, on prévoit un interrupteur pour relier la borne active du haut-parleur à ce quatrième conducteur.

Ainsi, l'invention concerne, de façon générale, un ensemble à microphone et haut-parleur destiné à coopérer avec un téléphone mobile, cet ensemble comprenant des moyens pour la prise de ligne du téléphone mobile et un connecteur de liaison avec ce téléphone, qui est caractérisé en ce que les moyens pour la prise de ligne comportent un interrupteur dans le circuit du microphone, un interrupteur dans le circuit du haut-parleur et un moyen d'actionnement pour que ces deux interrupteurs soient actionnables simultanément afin que l'ensemble puisse coopérer avec un téléphone mobile du type à prise de ligne effectuée par appel de courant provenant du circuit du microphone et avec un téléphone mobile du type à prise de ligne par appel de courant provenant du circuit du haut-parleur.

Cet ensemble comprend, dans une réalisation, un commutateur présentant une première position dans laquelle les masses du circuit du microphone et du circuit du haut-parleur sont connectées entre elles et une seconde position dans laquelle ces masses sont séparées.

Le connecteur peut comporter quatre sorties, l'une des sorties restant disponible quand le commutateur est dans la première position.

De préférence, l'ensemble comporte un moyen pour empêcher l'actionnement par inadvertance du commutateur.

Selon une réalisation, l'interrupteur dans le circuit du haut-parleur est disposé entre un premier conducteur relié au haut-parleur, et un second conducteur qui est relié au haut-parleur quand le commutateur est dans la seconde position et qui reste disponible quand ce commutateur est dans la première position.

Dans ce cas, le second conducteur peut être monté de façon à être relié au premier conducteur par l'intermédiaire de l'interrupteur dans le circuit du haut-parleur. Le premier et le second conducteurs peuvent être montés de façon à coopérer avec un circuit dans le téléphone mobile pour permettre la prise de ligne par détection d'appel de courant provenant du circuit du haut-parleur. Le connecteur comporte, par exemple, des moyens pour qu'un appel en courant soit effectué lors de la fermeture de l'interrupteur dans le circuit du haut-parleur.

Dans une réalisation, l'interrupteur disposé dans le circuit du microphone ou dans le circuit du haut-parleur est monté de façon telle qu'il établit, lors de l'actionnement de l'organe de commande des interrupteurs, un court-circuit aux bornes du microphone ou aux bornes du haut-parleur.

Les interrupteurs dans le circuit du haut-parleur et dans le circuit du microphone peuvent être distincts ou constituer les deux interrupteurs d'un double interrupteur.

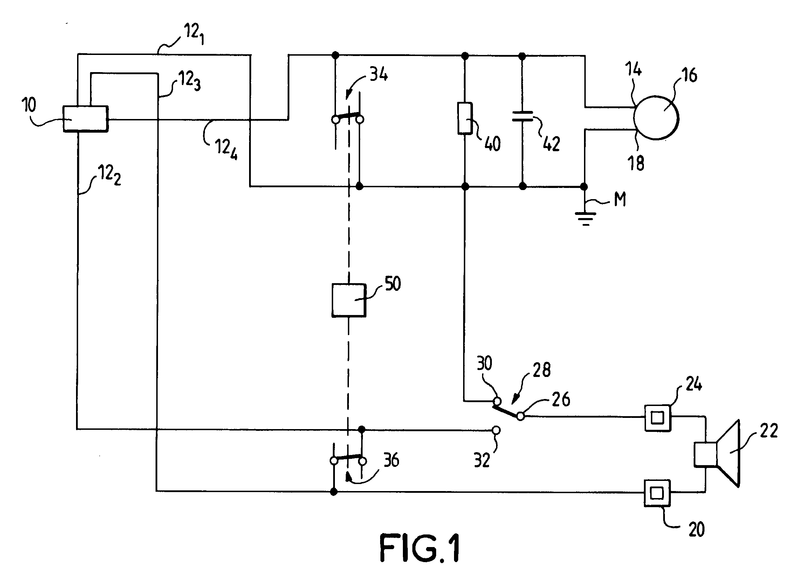

D'autres caractéristiques et avantages de l'invention apparaîtront avec la description de certains de ses modes de réalisation, celle-ci étant effectuée en se référant au dessin ci-annexé sur lequel la figure 1 représente un ensemble conforme à l'invention.

L'ensemble représenté sur la figure comprend un connecteur 10 de type « jack » femelle à quatre conducteurs de sortie respectivement 12₁, 12₂, 12₃ et 12₄. Le conducteur 12₁ est relié à la masse M du microphone. Le fil 12₄ est relié à une borne positive 14 d'un microphone 16 dont la seconde borne 18 est aussi connectée à la masse M.

Le fil 12₃ est relié à une borne positive 20 à laquelle est connecté un haut-parleur 22. La seconde borne du haut-parleur 22 est reliée à une seconde borne 24 qui est reliée à la première borne 26 d'un commutateur 28 à deux positions présentant deux autres bornes 30 et 32. Dans une première position, représentée sur la figure, les bornes 26 et 30 du commutateur 28 sont reliées entre elles, la borne 30 étant reliée à la masse M, c'est-à-dire au conducteur 12₁.Dans la seconde position du commutateur, les bornes 26 et 32 sont reliées entre elles, la borne 32 étant connectée au conducteur 12₂. Ainsi dans la seconde position, les deux circuits sont séparés et, dans la première position, ils présentent une masse commune.

Par ailleurs, un premier interrupteur 34 est disposé entre les conducteurs 12₁ et 12₄ et un second interrupteur 36 est disposé entre les conducteurs 12₂ et 12₃.

Les deux interrupteurs 34 et 36 sont actionnables par un seul organe tel qu'une touche 50. Dans cette réalisation, l'actionnement de la touche positionne les deux interrupteurs dans la même position (ouverte ou fermée). Dans la première position du commutateur 28, l'interrupteur 36 est disponible pour commuter un élément du téléphone mobile.

Le connecteur femelle 10 reçoit un cordon possédant un « jack » mâle et un connecteur qui est propre à coopérer avec le connecteur de chaque type de téléphone portable.

Dans le circuit du microphone 16, on prévoit de façon classique une résistance 40 et un condensateur 42 en parallèle sur les sorties 14 et 18.

L'ensemble à microphone 16 et haut-parleur 22 forme un « kit main libre », qui est en général solidaire d'un support qui peut être installé sur la tête de l'utilisateur de façon que le microphone soit à proximité de sa bouche et que le haut-parleur constitue une oreillette.

Le fonctionnement est le suivant.

Premier cas : Dans la position pour laquelle le conducteur 12₂ est relié à la borne 26 :

Pour effectuer la prise de ligne, c'est-à-dire effectuer un appel à partir du mobile ou répondre à un appel, l'utilisateur appuie sur la touche 50 qui ferme les interrupteurs 34 et 36. Dans ces conditions, les conducteurs 12₁ et 12₄ sont au même potentiel et de même, les conducteurs 12₂ et 12₃ sont au même potentiel. Cette fermeture des interrupteurs 34 et 36 provoque ainsi un appel de courant détecté par le téléphone mobile qui effectue la prise de ligne. Si ce dernier est du type à prise de ligne par appel en courant provenant du circuit du microphone, c'est la fermeture de l'interrupteur 34 qui provoquera cette prise de ligne et la fermeture de l'interrupteur 36 ne provoquera pas de perturbation. Si le mobile est du type à prise de ligne par appel en courant dans le circuit du haut-parleur, c'est la fermeture de l'interrupteur 36 qui provoquera cette prise de ligne et la fermeture de l'interrupteur 34 n'entraînera pas de perturbation.

Deuxième cas : Dans la position représentée sur la figure, dans laquelle le conducteur 12₁ est relié à la borne 26, la fermeture des interrupteurs 34 et 36 provoque un appel de courant détecté par le téléphone qui effectue la prise de ligne. Si ce dernier est du type à prise de ligne par un appel en courant dans le circuit du microphone, c'est la fermeture de l'interrupteur 34 qui provoquera cette prise de ligne et la fermeture de l'interrupteur 36 ne provoquera pas de perturbation. Si le mobile est du type à prise de ligne par appel en courant dans le circuit du haut-parleur, c'est la mise au même potentiel des conducteurs 12₃ et 12₂ qui provoque la prise de ligne par coopération avec des circuits à l'intérieur du mobile ou du connecteur de liaison, et la fermeture de l'interrupteur 34 n'entraînera pas de perturbation.

Le commutateur 28 est positionné par le fabricant de l'ensemble ou par le distributeur en fonction du mobile auquel il est destiné.

Ainsi, le « kit piéton » peut être fabriqué en grande série puisqu'il peut coopérer avec tous les types de mobiles. Il ne nécessite qu'une seule adaptation qui est la position du commutateur 28 et un connecteur de liaison.

## Revendications

1. Ensemble à microphone (16) et haut-parleur (22) destiné à coopérer avec un téléphone mobile, cet ensemble comprenant des moyens pour la prise de ligne du téléphone mobile et un connecteur de liaison avec ce téléphone,
**caractérisé en ce que** les moyens pour la prise de ligne comportent un interrupteur (34) dans le circuit du microphone (16), un interrupteur (36) dans le circuit du haut-parleur (22) et un moyen d'actionnement (50) pour que ces deux interrupteurs soient actionnables simultanément afin que l'ensemble puisse coopérer avec un téléphone mobile du type à prise de ligne effectuée par appel de courant provenant du circuit du microphone et avec un téléphone mobile du type à prise de ligne par appel de courant provenant du circuit du haut-parleur.

2. Ensemble selon la revendication 1, **caractérisé en qu'**il comprend un commutateur (28) présentant une première position (26, 30) dans laquelle les masses du circuit du microphone et du circuit du haut-parleur sont connectées entre elles et une seconde position (26, 32) dans laquelle ces masses sont séparées.

3. Ensemble selon la revendication 2, **caractérisé en ce que** le connecteur (10) comporte quatre sorties, l'une des sorties (12₂) restant disponible quand le commutateur est dans la première position.

4. Ensemble selon la revendication 2 ou 3, **caractérisé en ce qu'**il comporte un moyen pour empêcher l'actionnement par inadvertance du commutateur (28).

5. Ensemble selon l'une des revendications 2 à 4, **caractérisé en ce que** l'interrupteur (36) dans le circuit du haut-parleur est disposé entre un premier conducteur (12₃) relié au haut-parleur, et un second conducteur (12₂) qui est relié au haut-parleur quand le commutateur est dans la seconde position (26, 32) et qui reste disponible quand ce commutateur est dans la première position.

6. Ensemble selon la revendication 5, **caractérisé en ce que** le second conducteur (12₂) est monté de façon à être relié au premier conducteur par l'intermédiaire de l'interrupteur (36) dans le circuit du haut-parleur.

7. Ensemble selon la revendication 6, **caractérisé en ce que** le premier et le second conducteur sont montés de façon à coopérer avec un circuit dans le téléphone mobile pour permettre la prise de ligne par détection d'appel de courant provenant du circuit du haut-parleur.

8. Ensemble selon la revendication 6 ou 7, **caractérisé en ce que** le connecteur (10) comporte des moyens pour qu'un appel en courant soit effectué lors de la fermeture de l'interrupteur dans le circuit du haut-parleur.

9. Ensemble selon l'une des revendications précédentes, **caractérisé en ce que** l'interrupteur disposé dans le circuit du microphone ou dans le circuit du haut-parleur est monté de façon telle qu'il établit, lors de l'actionnement de l'organe de commande des interrupteurs, un court-circuit aux bornes du microphone ou aux bornes du haut-parleur.

10. Ensemble selon l'une des revendications précédentes, **caractérisé en ce que** les interrupteurs dans le circuit du haut-parleur et dans le circuit du microphone sont distincts.

11. Ensemble selon l'une des revendications 2 à 9, **caractérisé en ce que** les interrupteurs dans le circuit du haut-parleur et dans le circuit du microphone constituent les deux interrupteurs d'un double interrupteur.
